(19) Europäisches Patentamt
European Patent Office
Office européen des brevets

(11) EP 1 252 937 A1

(12) **EUROPEAN PATENT APPLICATION**
published in accordance with Art. 158(3) EPC

(43) Date of publication:
**30.10.2002 Bulletin 2002/44**

(21) Application number: **01900787.1**

(22) Date of filing: **16.01.2001**

(51) Int Cl.$^7$: **B05D 1/30**, B05D 7/24

(86) International application number:
**PCT/JP01/00226**

(87) International publication number:
**WO 01/053006 (26.07.2001 Gazette 2001/30)**

(84) Designated Contracting States:
**AT BE CH CY DE DK ES FI FR GB GR IE IT LI LU MC NL PT SE TR**

(30) Priority: **24.01.2000 JP 2000015011**
**23.03.2000 JP 2000082764**
**29.05.2000 JP 2000015890**

(71) Applicant: **Daikin Industries, Ltd.**
**Osaka-shi, Osaka 530-8323 (JP)**

(72) Inventors:
- **YAMAGUCHI, Seitaro, Daikin Industries, Ltd.**
  **Settsu-shi, Osaka 566-8585 (JP)**
- **OGITA, Koichiro, Daikin Indusstustries, Ltd.**
  **Settsu-shi, Osaka 566-8585 (JP)**

(74) Representative: **HOFFMANN - EITLE**
**Patent- und Rechtsanwälte**
**Arabellastrasse 4**
**81925 München (DE)**

(54) **METHOD FOR COATING SUBSTRATE, COATED ARTICLE AND COATING APPARATUS**

(57) A coating method characterized by coating, with a curtain flow coater, a liquid coating composition which comprises fluorine-containing polymer particles having an average particle size of from 0.01 to 100 μm and has a viscosity of from 0.1 to 500 mPa·s at coating. The curtain flow coater is used for coating of the coating composition comprising fluorine-containing polymer, though use of it has been difficult.

FIG. 1

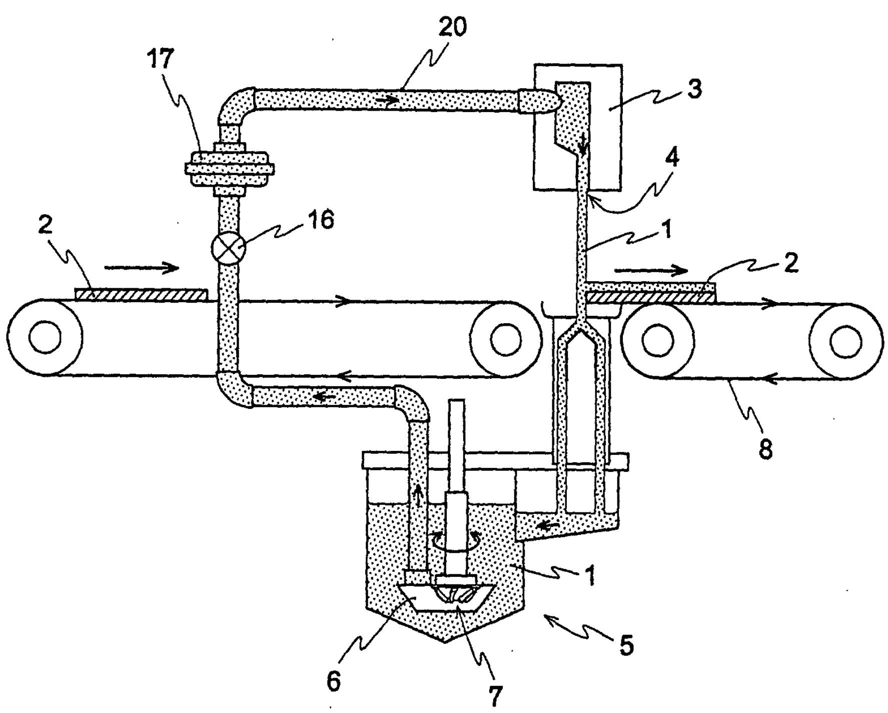


EP 1 252 937 A1

## Description

TECHNICAL FIELD

The present invention relates to a method of coating a substrate with a fluorine-containing coating composition in the form of liquid by using a curtain flow coater, particularly a method of coating a substrate, in which a collected coating composition is less foamed and a dried coating film being excellent in surface smoothness can be obtained even if the curtain flow coater is operated continuously by re-using the collected coating composition, and further relates to an obtained coated article and the curtain flow coater being capable of coating uniformly even at a low flow rate of the composition.

The present invention further relates to an aqueous dispersion composition of fluorine-containing polymer which has a good film forming property, gives good physical properties to a coating film, assures less foaming and particularly is suitable for coating with a curtain flow coater.

BACKGROUND ART

As shown in a diagrammatic flow chart of Fig. 1, a curtain flow coater generally comprises a head part 3 having a slit 4, a reservoir tank 5 of a liquid coating composition 1, a coating composition supply pump 6 arranged in the reservoir tank 5 and having a rotation part (impeller) 7 and a conveyor 8 for transferring a substrate 2. The curtain flow coater is an equipment for coating the substrate 2 with the liquid coating composition 1 by supplying the composition from the reservoir tank 5 to the head part 3 through a feeding pipe 20 with the coating composition supply pump 6 by adjusting a peripheral velocity of the rotation part 7 of the pump 6 and then flowing down the composition in the form of curtain through the slit 4 onto the substrate 2 being transferred by the conveyor 8.

When coating the substrate 2 (article to be coated) by using that curtain flow coater, the coating composition 1 is supplied from the reservoir tank 5 to the head part 3 by rotating the rotation part 7 of the coating composition supply pump 6 and is flowed down continuously in the form of thin film (in the form of curtain) through the slit 4 of the head part 3. The substrate 2 is passed under the head part 3 in the horizontal direction by the conveyor 8 and is coated with the coating composition 1 flowed down from the head part 3. The coating composition 1 which was not coated on the substrate 2 is collected in the reservoir tank 5 through a coating composition collecting route and is re-used.

The use of the curtain flow coater gives advantages that the coating can be carried out at high speed, a loss of coating composition is very small and a coating thickness can be controlled by adjusting a conveyor speed.

On the other hand, in the curtain flow coater, there is a case where foams are generated around the rotation part 7 of the supply pump 6 and are drawn into the coating composition and the coating composition is fed as it is to the head part 3 and is flowed down to be coated on the substrate, and as a result such foams remain in the obtained coating film and marks of foams appear on the dried coating film.

Also when a coating composition comprising fluorine-containing polymer particles dispersed therein is used, there is an important problem that since a shearing force is applied to the coating composition around the rotation part 7 of the pump 6, agglomeration and fibrillation of the fluorine-containing polymer particles arise and thickening of the composition occurs. Further when the curtain flow coater is operated continuously for a long period of time and the composition is collected and re-used, the above-mentioned foaming arises remarkably. Since those problems have not yet been solved, there is no example of actually coating the coating composition comprising fluorine-containing polymer particles with a curtain flow coater.

Korean Patent Publication No.95-26671 describes a method of coating a carbon fluoride resin for aluminum cooking apparatuses continuously by air-pressed spray coating. However described therein is an equipment for forcedly flowing out a carbon fluoride resin liquid through a slit by applying an air pressure to the resin liquid, and the equipment differs from the above-mentioned known curtain flow coater. It is unknown whether the carbon fluoride resin liquid is a solution or a dispersion of fluorine-containing polymer particles dispersed in a liquid carrier. A viscosity of the carbon fluoride resin liquid at coating is as high as 2,000 to 8,000 mPa·s. Also there is no description as to means for solving a problem with foaming.

As explained above, since it is difficult to coat a coating composition prepared by dispersing fluorine-containing polymer particles in a medium with a curtain flow coater, at present such a coating composition containing fluorine-containing polymer particles dispersed therein is usually coated by spray coating or roll coating. However there is a problem that the spray coating is inferior in coating efficiency and there is much loss of coating composition. In the roll coating, there is a problem that though coating efficiency is high, marking of roll pattern remains on a coating film.

The inventors of the present invention have made intensive studies with respect to a method of coating with a curtain flow coater by using a liquid coating composition containing fluorine-containing polymer particles which is disadvantageous in a long-term continuous operation due to much foaming as mentioned above, and as a result, by devising a method for supplying the coating composition from the reservoir tank to the head part and a range of viscosity

of the composition at coating, have found a coating method which assures less foaming and can give a dry coating film excellent in surface smoothness even in case of continuous operation, thus having completed the present invention.

By the way, an aqueous dispersion containing fluorine-containing polymer particles is usually prepared by so-called emulsion polymerization in the presence of an anionic surfactant by using a water soluble polymerization initiator and is obtained in the form of colloid having an average particle size of from 0.05 to 1.0 μm in the aqueous dispersion (latex). The obtained aqueous dispersion itself is unstable and sedimentation of polymer particles during storage and agglomeration of polymer particles by stirring easily occur. Therefore a nonionic surfactant such as polyoxyethylene alkyl phenyl ether is added to secure dispersion stability of the polymer particles. For that reason, foaming is easily caused by stirring and the generated foams are difficult to disappear.

In order to inhibit generation of foaming and break the generated foams, a silicone compound being excellent in defoaming property has been usually used as a defoaming agent. However with respect to the silicone type defoaming agent, there was a problem that the defoaming agent remaining in a coating film had an adverse effect on film forming property and physical properties of the coating film.

As mentioned above, particularly in case where a coating composition comprising the above-mentioned aqueous dispersion is coated by using a curtain flow coater, there was a problem that marks of foaming remain in a coating film and a silicone compound causes failure of curtain flow.

Also though acetylenediol type defoaming agent is known as a defoaming agent being excellent in defoaming property, there is a problem that an effect thereof does not continue.

As mentioned above, intensive studies have been made with respect to a defoaming agent which has a continuing defoaming property against a coating composition comprising an aqueous dispersion containing fluorine-containing polymer particles and surfactant, does not remain in a coating film and does not have an adverse effect on film forming property and physical properties of the coating film. As a result, it was found that a specific hydrocarbon compound is excellent specifically in defoaming of that system and does not remain in the coating film and further that a coating composition particularly suitable for coating with a curtain flow coater can be obtained, and thus the present invention was completed.

## DISCLOSURE OF INVENTION

The present invention relates to a method of coating a substrate which is featured by coating a liquid coating composition which contains fluorine-containing polymer particles having an average particle size of from 0.01 to 100 μm and has a viscosity of from 0.1 to 500 mPa·s at coating.

Also the present invention relates to a method of coating a substrate characterized by using a curtain flow coater (hereinafter referred to as "curtain flow coater (I)") which comprises a head part having a slit, a reservoir tank of a liquid coating composition, a composition supply pump being arranged in the reservoir tank and having a rotation part and a substrate transferring conveyor and carries out the coating by feeding the liquid coating composition from the reservoir tank to the head part with the composition supply pump by adjusting a peripheral velocity of the rotation part of the pump and then flowing down the coating composition through the slit onto the surface of the substrate being transferred by the conveyor. The above-mentioned liquid coating composition comprises fluorine-containing polymer particles having an average particle size of from 0.01 to 100 μm, has a viscosity of from 0.1 to 500 mPa·s at coating and is supplied to the head part under the condition that a peripheral velocity of the rotation part of the pump is from 0.1 to 12.0 m/sec.

Further the present invention relates to a method of coating a substrate which is characterized by using a novel curtain flow coater (hereinafter referred to as "curtain flow coater (II)") which comprises a head part having a slit, a lower reservoir tank of the liquid coating composition, an upper reservoir tank of the liquid coating composition, an air pump and a substrate transferring conveyor and carries out the coating by feeding the liquid coating composition from the lower reservoir tank to the upper reservoir tank with the air pump, feeding the composition spontaneously from the upper reservoir tank into the head part and then flowing down the coating composition onto a substrate surface being transferred by the conveyor. The above-mentioned liquid coating composition comprises particles of fluorine-containing polymer having an average particle size of from 0.01 to 100 μm and has a viscosity of from 0.1 to 500 mPa·s at coating.

A suitable temperature of the coating composition at coating is within a range of from 0° to 25°C.

The present invention further relates to a coated article obtained by coating a substrate by the coating methods mentioned above.

Also the present invention relates to the curtain flow coater having a head part equipped with a coating supply mechanism which can coat in a very uniform coating thickness even at a low flow rate of the coating composition. The coating supply mechanism is characterized in that inlet ports for supplying the coating composition into the head part are provided being faced opposite to each other in the same number on both two side walls arranged in a direction crossing a slit.

It is preferable that the above-mentioned liquid coating composition to be used for those coating methods is prepared by adding from 0.01 to 20 parts by weight (hereinafter referred to as "part"), preferably from 0.01 to 15.0 parts of at least one selected from the group consisting of an organic liquid, high molecular polyether surfactant, fatty acid ester, metal soap and silicone compound which have a defoaming ability based on 100 parts of the coating composition.

Those additives act as a defoaming agent, and particularly a saturated aliphatic hydrocarbon having 6 to 12 carbon atoms and/or an aromatic hydrocarbon having 7 to 11 carbon atoms are excellent in not only a defoaming activity but also film forming property and physical properties of a coating film.

Accordingly the present invention further relates to an aqueous dispersion composition, particularly a coating composition which contains fluorine-containing polymer particles having an average particle size of from 0.01 to 100 μm and a surfactant, has a viscosity of from 0.1 to 500 mPa·s at coating and is prepared by adding a saturated aliphatic hydrocarbon having 6 to 12 carbon atoms and/or an aromatic hydrocarbon having from 7 to 11 carbon atoms as a defoaming agent in an amount of from 0.01 to 20 parts based on 100 parts of a solid content of the composition, and further relates to a composition suitable as a coating composition for a curtain flow coater.

BRIEF DESCRIPTION OF DAWINGS

Fig. 1 is a diagrammatic flow chart of the curtain flow coater (I) to be used in the present invention.

Fig. 2 is a diagrammatic flow chart of the curtain flow coater (II) to be used in the present invention.

Fig. 3 is a diagrammatic cross-sectional view of the mechanism for supplying a coating composition to the head part, which is used in best embodiment of the present invention.

Fig. 4 is a plan view of a coated article for explaining a measuring point of a coating thickness of a coating film of the coated article.

Fig. 5 is a diagrammatic cross-sectional view of a conventional mechanism for supplying a coating composition to the head part.

BEST MODE FOR CARRYING OUT THE INVENTION

The fluorine-containing polymer to be used in the present invention is suitably used for imparting, for example, non-sticking property and lubricity to a substrate to be coated.

Examples of the preferred fluorine-containing polymer are a homopolymer or copolymer of monoethylene type unsaturated hydrocarbon in which a part or the whole of hydrogen atoms are substituted with fluorine atom or fluorine atom and chlorine atom. A mixture of the homopolymer and/or the copolymer can also be used. Non-restricted examples thereof are mentioned below.

Examples of the homopolymer are, for instance, polytetrafluoroethylene (PTFE), polychlorotrifluoroethylene (PCTFE), polyvinylidene fluoride (PVdF) and polyvinyl fluoride (PVF).

Examples of the copolymer are, for instance, copolymers of tetrafluoroethylene (TFE) with monomer copolymerizable with TFE, for example, a compound represented by the formula (I):

$$X(CF_2)_mO_nCF=CF_2 \qquad (I)$$

wherein X represents hydrogen atom, chlorine atom or fluorine atom, m is an integer of from 1 to 6, n is 0 or 1, a compound represented by the formula (II):

$$C_3F_7O[CF(CF_3)CF_2O]_p\text{-}CF=CF_2 \qquad (II)$$

wherein p is 1 or 2, or a compound represented by the formula (III):

$$X(CF_2)_qCY=CH_2 \qquad (III)$$

wherein X is as defined above, Y represents hydrogen atom or fluorine atom, q is an integer of from 1 to 6.

Examples of the copolymer are, for instance, TFE/perfluoro(alkyl vinyl ether) (PAVE) copolymer (PFA) and TFE/hexafluoropropylene (HFP) copolymer (FEP). In addition, there are TFE/chlorotrifluoroethylene (CTFE) copolymer, TFE/vinylidene fluoride (VdF) copolymer, TFE/ trifluoroethylene (3FH) copolymer, TFE/ethylene copolymer (ETFE), VdF/HFP copolymer, ethylene/CTFE copolymer (ECTFE), ethylene/hexafluoropropylene copolymer and TFE/propylene copolymer.

Examples of the terpolymer are, for instance, VdF/TFE/HFP copolymers.

Examples of the above-mentioned mixture of homopolymer or copolymer are, for instance, a mixture of PTFE and PFA, a mixture of PTFE and FEP, a mixture of PTFE, PFA and FEP, a mixture of PFA and FEP, and the like.

In addition, there are homopolymers or copolymers of a perfluoroalkyl (meth)acrylate, for example,

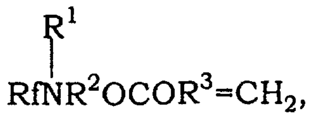, $Rf(CH_2)_rOCOCR^3=CH_2$,

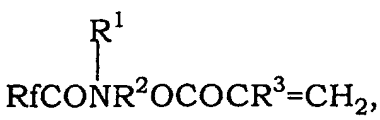

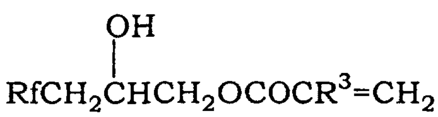 and

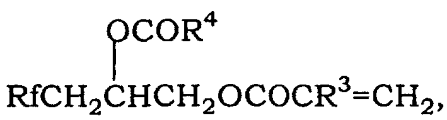

wherein Rf is a perfluoroalkyl group having 4 to 20 carbon atoms, $R^1$ is hydrogen or an alkyl group having 1 to 10 carbon atoms, $R^2$ is an alkylene group having 1 to 10 carbon atoms, $R^3$ is hydrogen or methyl group, $R^4$ is an alkyl group having 1 to 17 carbon atoms, r is an integer of from 1 to 10, vinyl ester of carboxylic acid having a perfluoroalkyl group, for example,

$$Rf(CH_2)_sCOOCH=CH_2$$

wherein Rf is as defined above, s is 0 or an integer of from 1 to 10, and allyl ester of (meth)acrylic acid having a perfluoroalkyl group, for example,

$$RfCH=CH(CH_2)_rOCOCR^3=CH_2$$

wherein Rf and r are as defined above, and the like, or copolymers of those monomers with other monomer copolymerizable therewith.

Non-restricted examples of the other copolymerizable monomer are, for instance, an alkyl (meth)acrylate (alkyl having 1 to 20 carbon atoms), cyclohexyl (meth)acrylate, benzyl (meth)acrylate, polyethylene glycol di(meth) acrylate, N-methylolpropane acrylamide, ethylene, vinyl chloride, vinyl fluoride, (meth)acrylamide, styrene, $\alpha$-methylstyrene, p-methylstyrene, vinyl alkyl ether (alkyl having 1 to 20 carbon atoms), halogenated alkyl vinyl ether (alkyl having 1 to 20 carbon atoms), vinyl alkyl ketone (alkyl having 1 to 20 carbon atoms), maleic anhydride, butadiene,

isoprene, chloroprene, and the like.

The above-mentioned fluorine-containing polymer particles are usually prepared by so-called emulsion polymerization of the above-mentioned monomer in an aqueous medium in the presence of a surfactant, and is obtained in the form of colloid in which an average particle size in the aqueous dispersion (latex) is from 0.01 to 1.0 μm. The aqueous dispersion is used as it is or is optionally coagulated and re-dispersed to give an aqueous dispersion in which particles having an average particle size of from 0.01 to 100 μm are dispersed. An average particle size thereof is preferably from 0.1 to 10 μm from the viewpoint of good dispersion stability of the fluorine-containing polymer particles in the aqueous dispersion. However there is a case where the fluorine-containing polymer particles are unstable as they are, and sedimentation of polymer particles during storage and agglomeration of polymer particles by stirring easily occur. Therefore a surfactant is added to maintain dispersion stability of the polymer particles.

With respect to the surfactant as such a dispersion stabilizing agent, for example, nonionic surfactants such as polyoxyethylene alkyl phenyl ether and polyoxyethylene alkyl ether are mainly used. Further a non-fluorine-containing anionic surfactant such as sodium lauryl sulfate, a fluorine-containing anionic surfactant such as ammonium perfluorooctanoate, or the like is used together with the nonionic surfactant.

Accordingly in the present invention, the fluorine-containing aqueous dispersion to be subjected to defoaming is one in which basically the fluorine-containing polymer particles having an average particle size of from 0.01 to 100 μm, preferably from 0.05 to 50 μm, more preferably from 0.1 to 10 μm are dispersed stably in an aqueous liquid carrier such as water by an activity of the above-mentioned surfactant.

In addition to the above-mentioned fluorine-containing polymer particles, a resin other than the fluorine-containing resin can be added as the resin particles of the coating composition of the present invention for the purpose to improve characteristics of a coating film such as film forming property and corrosion resistance. Non-restricted examples thereof are a polyamide resin, polyimide resin, polyamideimide resin, polyether sulfone resin, polyphenylene sulfide resin, phenol resin, urea resin, epoxy resin, urethane resin, melamine resin, polyester resin, polyether resin, acrylic resin, acryl silicone resin, silicone resin, silicone polyester resin, and the like. Among those other resins, preferred are those having an average particle size within the same range as in the fluorine-containing polymer, that is, from 0.01 to 100 μm. An adding amount thereof is optionally selected depending on purpose, application and required characteristics.

A liquid medium for the liquid coating composition of the present invention is water or a liquid mixture mainly comprising water (hereinafter the both are referred to as "aqueous medium"), or one or a mixture of two or more organic liquids (hereinafter referred to as "organic medium").

Non-restricted example of the organic liquid is, for instance, at least one selected from the group consisting of nitrogen-containing solvents such as N-methyl-2-pyrrolidone and dimethylacetamide; oxygen-containing solvents such as γ-butyrolactone; aromatic hydrocarbons such as xylene and toluene; hydrocarbons such as petroleum solvent mixtures represented by mineral spirit (JIS industrial gasoline No.4) and SOLVESSO (available from EXXON CHEMICAL CO., LTD.); esters such as butyl acetate; ketones such as methyl isobutyl ketone; glycol ethers such as butyl cellosolve; and alcohols such as 1-butanol.

In case of the aqueous dispersion composition of the present invention, which is prepared by using an aqueous medium, solvents of hydrocarbon as an organic liquid to be mixed to water, particularly solvents of saturated aliphatic hydrocarbon having 6 to 12 carbon atoms and aromatic hydrocarbon having 7 to 11 carbon atoms which are explained hereinafter and are added as a defoaming agent act as a defoaming agent but not as a solvent.

Further in the present invention, it is preferable to add a defoaming agent to eliminate foaming which may arise at the time of mixing, feeding, coating or collecting the coating composition. Examples of the defoaming agent are at least one of an organic liquid, high molecular polyether surfactant, fatty acid ester, metal soap or silicone compound and a mixture of two or more thereof.

An organic liquid as a defoaming agent is used when the liquid carrier is the aqueous medium. Non-restricted examples thereof are mentioned below.

Concretely there are nitrogen-containing solvents such as N-methyl-2-pyrrolidone, dimethylacetamide, diethylamine, triethylamine, ethanolamine, diethanolamine and triethanolamine; oxygen-containing solvents such as γ-butyrolactone; aromatic hydrocarbons such as xylene and toluene; hydrocarbons such as petroleum solvent mixtures represented by mineral spirit (JIS industrial gasoline No.4) and SOLVESSO (available from EXXON CHEMICAL CO., LTD.); esters such as butyl acetate; ketones such as methyl isobutyl ketone and acetone; polyvalent alcohols such as ethylene glycol, diethylene glycol, triethylene glycol and glycerine; ethers such as tetrahydrofuran; glycol ethers such as butyl cellosolve; monovalent alcohols such as 1-butanol, methyl alcohol, ethyl alcohol and isopropyl alcohol; and acetylenes such as 2,4,7,9-tetramethyl-5-decyne-4,7-diol and 3,5-dimethyl- 1-hexyne-3-ol. At least one selected therefrom can be used. Preferably used is at least one selected from the group consisting of toluene, xylene, mineral spirit, SOLVESSO, ethylene glycol and 2,4,7,9-tetramethyl-5-decyne-4,7-diol which can provide a defoaming effect in a small amount.

Further a saturated aliphatic hydrocarbon having 6 to 12 carbon atoms and/or aromatic hydrocarbon having

7 to 11 carbon atoms are preferred from the viewpoint of exhibiting a remarkable defoaming activity and giving a film forming property of the composition and physical properties of a coating film. Details thereof are explained hereinafter.

Non-restricted example of the usable high molecular polyether surfactant as a defoaming agent is, for instance, at least one nonionic surfactant having a low HLB value (hydrophilic property) selected from sorbitan lauryl acid monoester, sorbitan lauryl acid triester, polyethylene glycol fatty acid ester, oxyethylene/oxypropylene random copolymer, oxyethylene/oxypropylene block copolymer, and the like.

Non-restricted examples of the usable fatty acid ester as a defoaming agent are, for instance, triglyceryl ester of fatty acid and glycerine (so-called triglyceride), ester of fatty acid and higher monovalent alcohol or divalent alcohol (so-called wax), and the like.

Non-restricted examples of the usable metal soap as a defoaming agent are, for instance, metal salts other than alkali metal of fatty acid, resin acid and naphthenic acid, and the like.

Non-restricted example of the usable silicone compound as a defoaming agent is, for instance, at least one selected from dimethyl silicone, methyl chloride silicone, organic modified silicone, and the like. The silicone compound can be used in the form of solution prepared by dissolving the silicone compound in an organic solvent or in the form of emulsion prepared by emulsifying and dispersing the silicone compound in water.

An amount of the organic liquid, high molecular polyether surfactant or silicone compound as a defoaming agent which can be added, as case demands, to the coating composition to be used in the present invention is from 0.01 to 15.0 parts, preferably from 0.02 to 10.0 parts based on 100 parts of a solid content of the coating composition. When the above-mentioned specific hydrocarbon is used as a defoaming agent, an adding amount thereof is from 0.01 to 20 parts, preferably from 0.1 to 10 parts based on 100 parts of a solid content of the coating composition.

In the present invention, a viscosity of the coating composition at coating for the curtain flow coater must be from 0.1 to 500 mPa·s, preferably from 1 to 300 mPa·s, further preferably from 5 to 130 mPa·s. A temperature of the coating composition at coating is usually from 0° to 25°C, more preferably from 10° to 25°C. If the viscosity is too high, since foams are difficult to break, many marks of the foams remain on the coating film even after drying and sintering, and when the curtain flow coater is operated for a long period of time, a solid sticks on inner walls of a reservoir tank and the marks of foams on the coating film further increase. If the viscosity is too low, there is a tendency that the coating composition sticking on a substrate flows. If the temperature of the coating composition is too low at coating, a liquid carrier of the coating composition is frozen when it is water or a flowability of the composition is inferior. Therefore the composition need be diluted with the liquid carrier and a coating thickness after drying becomes thin. Also when the temperature at coating is not less than 25°C, the fluorine-containing polymer particles are easily agglomerated. In the present invention the viscosity is measured with a rotational viscometer with a single cylinder (SB viscometer) described in JIS K5400-4.5.3.

The present invention also relates to the aqueous dispersion composition, further to the coating composition particularly suitable for curtain flow coating which contains a surfactant and further a specific hydrocarbon compound as a defoaming agent as mentioned above. The aqueous dispersion composition and the specific hydrocarbon compound to be used therefor are explained below in detail. However with respect to the surfactant, etc. already explained above, explanation thereof is deleted to avoid duplication.

The specific hydrocarbons particularly preferred as a defoaming agent are a saturated aliphatic hydrocarbon having 6 to 12 carbon atoms and/or an aromatic hydrocarbon having 7 to 11 carbon atoms. It is a fact found out for the first time in the present invention that those hydrocarbon compounds have a remarkable defoaming activity on the aqueous dispersion of fluorine-containing polymer.

A saturated aliphatic hydrocarbon having 5 or less carbon atoms has a low boiling point and is inferior in defoaming ability. Also a saturated aliphatic hydrocarbon having 13 or more carbon atoms and an aromatic hydrocarbon having 12 or more carbon atoms are inferior in defoaming ability and have a high boiling point, and thus delay drying of the coating composition and easily remain in a coating film.

Non-restricted examples of the saturated aliphatic hydrocarbon having 6 to 12 carbon atoms which can be used in the present invention are preferably one or a mixture of two or more of compounds represented by the following formulae. Also there are cyclic compounds such as ethylcyclohexane.

$$CH_3(CH_2)_1CH_3$$

wherein 1 = 4 to 10,

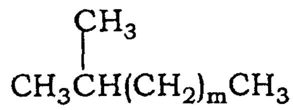

wherein m = 2 to 8,

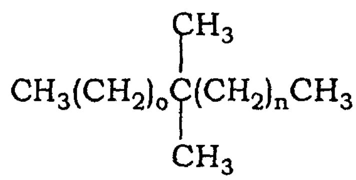

wherein n = 0 to 6, o = 0 to 6, (n + o) ≦ 7 except n = o = 0,

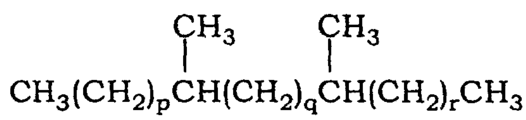

wherein p = 0 to 6, q = 0 to 6, r = 0 to 6, (p + q + r) ≦ 6,

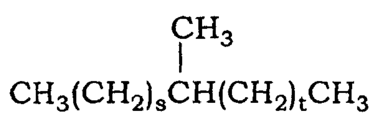

wherein s = 1 to 6, t = 1 to 6, (s + t) ≦ 8,

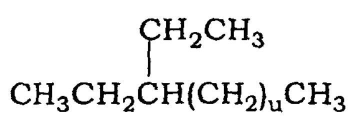

wherein u = 0 to 6,

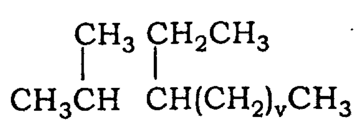

wherein v = 1 to 5,

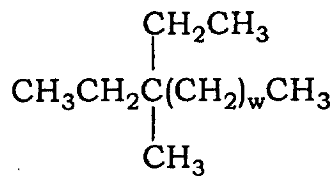

wherein w = 1 to 5,

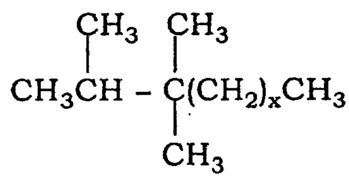

wherein x = 0 to 5,

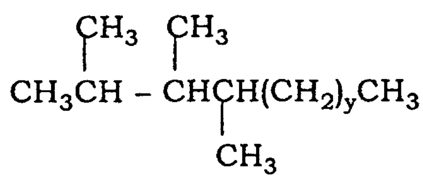

wherein y = 0 to 4,

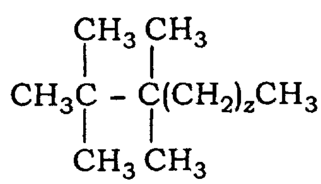

wherein z = 0 to 4, and

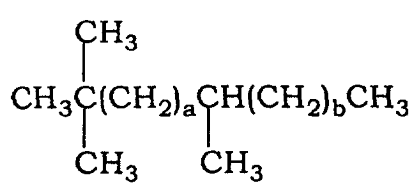

wherein a = 0 to 6, b = 0 to 6, a + b ≦ 5.

Non-restricted examples of the aromatic hydrocarbon having 7 to 11 carbon atoms are, for instance, toluene, xylene, trimethyl benzene, methyl ethyl benzene, propyl benzene, butyl benzene, and the like. Also a mixture of two or more aromatic hydrocarbons selected therefrom may be used. Examples of commercially available one are SOLVESSO 100, SOLVESSO 150 and SOLVESSO 200 (available from EXXON CHEMICAL CO., LTD).

Further at least one saturated aliphatic hydrocarbon having 6 to 12 carbon atoms and at least one aromatic hydrocarbon having 7 to 11 carbon atoms may be used together. Examples of such a mixture commercially available are mineral spirits (Japanese Industrial Standard, Industrial gasoline No. 4) which are advantageous from the viewpoint of being obtainable at very low cost.

An adding amount of those hydrocarbon compounds as a defoaming agent is, as mentioned above, from 0.01 to 20 parts by weight, preferably from 0.1 to 10 parts by weight based on 100 parts by weight of a solid content of the aqueous dispersion of fluorine-containing polymer. When the adding amount is less than 0.01 part by weight, it is not preferable because a defoaming effect is not obtained sufficiently, and when the adding amount is more than 20 parts by weight, it is not preferable because a dispersion stability of the fluorine-containing polymer particles is lowered. The above-mentioned other known defoaming agents may be used together.

It is preferable that a viscosity of the aqueous dispersion composition of the present invention is adjusted to 0.1 to 500 mPa·s, preferably 1 to 300 mPa·s for the curtain flow coater.

Also the viscosity is not limited particularly when the composition is applied to other use or other coating method. The viscosity may be adjusted in a range of from 0.1 to 10,000 mPa·s, further from 1 to 1,000 mPa·s depending on the application and coating method. With respect to a solid content, a preferred range of the solid content is from 10 to 80 % by weight, usually from 20 to 70 % by weight.

Also examples of other coating method are, for instance, spray coating, roll coating, doctor blade coating, dip coating, impregnation coating, spin flow coating, and the like.

To the coating composition to be used in the present invention can be further added various additives depending on applications of a coating film or for the purpose to improve coatability and characteristics of the coating film. Examples of the additive are, for instance, a solid lubricant, pigment, filler, pigment dispersing agent, antisettling agent, water absorbing agent, surface modifier, thixotropy imparting agent, viscosity modifier, gelation inhibitor, ultraviolet ray absorbant, light stabilizer, plasticizer, antifloating agent, antiskinning agent, scratch inhibitor, antifungal agent, antibacterial agent, antioxidant, antistatic agent, silane coupling agent, and the like.

Non-restricted examples of the substrate to be coated by the coating method of the present invention are, for instance, metals such as iron, aluminum, copper and alloys thereof; inorganic materials such as enamel, glass and ceramics; and the like. It is desirable that before coating with a curtain flow coater, surface preparation by degreasing, chemical conversion treatment, acid or alkali etching or sand blasting is carried out depending on kind and application of the coating composition.

In the present invention, a known curtain flow coater (I) and the curtain flow coater (II) specially modified for the fluorine-containing polymer particles may be used.

First the curtain flow coater (I) is explained according to a diagrammatic flow chart of Fig. 1. The curtain flow coater (I) basically comprises the head part 3 with the slit 4, the reservoir tank 5 of the liquid coating composition 1, the coating composition supply pump 6 arranged in the reservoir tank 5 and equipped with the rotation part (impeller) 7 and the conveyor 8. The curtain flow coater (I) is an equipment for supplying the liquid coating composition 1 from the reservoir tank 5 provided at the bottom thereof into the head part 3 through a feeding pipe 20 by means of the supply pump 6 by adjusting a peripheral velocity of the rotation part 7 of the pump and then flowing down through the slit 4 to coat the composition on a surface of the substrate 2 being transferred by means of the conveyor 8.

Though some kinds of pumps are used as the coating composition supply pump 6 depending on a viscosity of the coating composition 1, in case where a viscosity of the composition is as relatively low as from 0.1 to 500 mPa·s, preferred is a centrifugal pump which generates a swirling flow of the composition 1 in the reservoir tank 5 by rotating the impeller (rotation blade), i.e. the rotation part 7 of the pump 6 and lifts up the composition by making use of centrifugal force. In that case, a peripheral velocity of the rotation part (impeller) 7 need be from 0.1 to 12.0 m/sec, preferably from 1.0 to 8.0 m/sec, more preferably from 3.0 to 7.0 m/sec. When the peripheral velocity is too low, the coating composition cannot be lifted up, and when the peripheral velocity is too high, a strong shearing force is applied to the coating composition, thus causing agglomeration or fibrillation of the fluorine-containing polymer particles. The peripheral velocity of the rotation part (impeller) can be obtained by the following equation.

$$\text{(Peripheral velocity: m/sec)} = \text{(Number of rotations per minute of impeller: rpm)} \times 2 \times \text{(Radius of impeller: m)} \times (\text{Number } \pi)/60$$

Usually the feeding pipe 20 for feeding the coating composition from the pump 6 to the head part 3 is provided with a flow regulating valve 16 and a filter chamber 17 for removing a foreign matter (for example, an agglomerate of a large particle size).

In addition to the above-mentioned centrifugal pump, pumps having a rotation part such as a mixed flow pump, axial flow pump, gear pump, vane pump, screw pump, cam pump and vortex flow pump can be used as the coating

composition supply pump 6.

In case of the curtain flow coater (I), when the above-mentioned conditions (average particle size of the fluorine-containing polymer particles, viscosity of the coating composition at coating, and peripheral velocity of the rotation part of the pump) are set in the respective ranges of the present invention, the coating composition of fluorine-containing polymer can be coated continuously on a substrate. Other operating conditions are selected optionally.

Then the curtain flow coater (II) is explained below according to the diagrammatic flow chart of Fig. 2. The curtain flow coater (II) comprises the head part 3 having the slit 4, the lower reservoir tank 5a of the liquid coating composition 1, the upper reservoir tank 5b of the liquid coating composition 1, the air pump 9 and the substrate transferring conveyor 8. The curtain flow coater (II) is an equipment for feeding the liquid coating composition 1 from the lower reservoir tank 5a to the upper reservoir tank 5b with the air pump 9, feeding the composition 1 from the upper reservoir tank 5b to the head part 3 spontaneously and then flowing down the composition through the slit 4, thus coating a surface of the substrate 2 being transferred by means of the conveyor 8.

The curtain flow coater (II) has a novelty in that the coating composition is fed and supplied in combination use of the lower reservoir tank 5a, upper reservoir tank 5b and air pump 9. As mentioned above, if a shearing force is applied to the coating composition containing fluorine-containing polymer particles, agglomeration and fibrillation are easily caused. In the curtain flow coater (II), the shearing force is minimized by using the air pump 9. The air pump 9 basically comprises a chamber 10, a connection valve 11, a compressed air valve 12, a release valve 13, a feeding pipe 14 and a check valve 15 equipped on the pipe 14. In operating the pump, first the connection valve 11 is opened to introduce the coating composition in the lower reservoir tank 5a into the chamber 10. At that time, the compressed air valve 12 and the check valve 15 are previously closed and the release valve 13 is previously opened. Then the connection valve 11 and the release valve 13 are closed, and the compressed air valve 12 is opened to increase a pressure of an upper part in the chamber 10. When the pressure reached a specified pressure, by opening the check valve 15, the coating composition passes through the feeding pipe 14 and as case demands, passes through a filter chamber 17 and is pushed out into the upper reservoir tank 5b. After the coating composition in the chamber 10 has been delivered, the check valve 15 and the compressed air valve 12 are closed and the connection valve 11 and the release valve 13 are opened to restore the chamber to an initial state. The coating composition lifted up to the upper reservoir tank 5b is flowed down into the head part 3 spontaneously by its static pressure and then flowed through the slit 4 in the form of a curtain-like film to be coated on the substrate 2. In order to adjust the flowing amount into the head part 3, the flow regulating valve 16 may be provided. A lift up operation of the coating composition by means of the air pump 9 is repeated in a cycle enabling the flowing through the slit 4 to be carried out at a stationary state.

In addition to the above-mentioned pump for feeding compressed air, a piston pump, plunger pump and diaphragm pump can be used as the air pump 9.

As mentioned above, in the curtain flow coater (II), there are almost no portions where a shearing force is applied to the coating composition. Thus the curtain flow coater (II) is advantageous as a coater for the coating composition of fluorine-containing polymer particles which has specific problems with agglomeration and fibrillation.

An air pressure to be applied in the chamber 10 may be selected optionally depending on a viscosity of the coating composition, kind of fluorine-containing polymer and an effective width of the slit 4. A preferred pressure is from about 0.01 MPa to about 1.0 MPa.

Other preferred conditions common to the curtain flow coaters (I) and (II) are briefly explained below.

A clearance of the slit 4 of the head part 3 is adjusted so that the flowing film of the coating composition in the form of curtain should not be broken in the viscosity and flow of the coating composition. The clearance is usually within a range of from 0.1 to 1.0 mm.

When a speed of the conveyor 8 for transferring the substrate 2 (article to be coated) horizontally is slow, a coating amount increases, and when the speed is fast, the coating amount decreases. The conveyor speed is determined to give a desired coating amount, and is usually within a range of from 20 to 150 m/min.

The coating composition is usually supplied to the head part 3 through one feeding pipe 20 provided with the flow regulating valve 16 and an inlet port 22a provided on one side wall 21a as shown in Fig. 5 which is a diagrammatic cross-sectional view of the head part 3. The side walls 21a and 21b are positioned opposite to each other in a direction crossing the slit 4.

However if a flow of the coating composition is decreased to inhibit generation of foams during the feeding or to form a thin coating film, naturally an amount of the composition to be supplied to the head part 3 decreases and an amount of the composition in the head part 3 decreases. Accordingly an amount of the composition flowing down at the side far from the inlet port 22a decreases and the amount of the composition flowing down from the slit 4 becomes non-uniform in the longitudinal direction of the slit 4. As a result, a coating thickness on the substrate 2 becomes thin at the side far from the inlet port 22a.

In order to reduce non-uniformity of the flowing down amount of the composition, studies have been made, and it was found that as shown in Fig. 3, by supplying the coating composition into the head part 3 simultaneously through the inlet ports 22a and 22b provided on the side walls 21a and 21b, even if a supply amount of the composition

is decreased and an amount thereof in the head part 3 is decreased, non-uniformity in an amount flowing down through the slit 4 does not occur and also non-uniformity in an obtained coating thickness does not arise.

For feeding the coating composition to the inlet ports 22a and 22b, there is, for example, a method of branching the feeding pipe 20 into two pipes 23a and 23b between the filter chamber 17 and the head part 3, providing flow regulating valves 24a and 24b on the pipes 23a and 23b, respectively and connecting the pipes 23a and 23b to the inlet ports 22a and 22b, respectively. Though it is not shown in the drawings, two supply pumps (shown in Fig. 1) may be used and pipes may be connected directly to each inlet port through flow regulating valves.

Amounts of the coating composition flowing into the head part 3 from the inlet ports 22a and 22b positioned opposite to each other are adjusted with the flow regulating valves 24a and 24b so that the amounts become the same substantially.

Though on each of the side walls 21a and 21b, one or a plurality of inlet ports may be provided, it is preferable that the number of inlet ports on both side walls is the same.

This two-way simultaneous supplying mechanism is useful means when the flow rate must be decreased not only in case of the coating composition containing fluorine-containing polymer, the flow rate of which need be minimized, but also in case of other coating composition.

In the present invention, after coating of the coating composition with the curtain flow coater, drying and baking are carried out under the conditions of from 10° to 420°C for 10 to 45 minutes depending on kind of the coating composition. After the drying of the coating film, if necessary, re-coating can be carried out with the curtain flow coater. By repeating those steps, it is possible to form two or more coating layers.

The so-obtained coating film is excellent in surface lubricity and has good gloss as compared with a coating film obtained by conventional spray coating method.

Non-restricted examples of application of the coated article are, in case of making the best use of non-sticking property of the coating film, applications for metal cooking apparatuses such as frying pan, pot, roasting pot, rice cooker, oven, electric pot, ice making tray, griddle, baking mold, cooking knife and portable gas range; and industrial uses such as roll, range hood and metal mold; and in case of making the best use of lubricity of the coating film, tools such as saw and file; iron, bearing, valve, wire and metal foil (for sliding member), and the like.

The present invention is then explained by means of examples and comparative examples, but is not limited to them.

EXAMPLE 1

A coating composition for primer was prepared by sufficiently mixing with a stirrer, 100 parts of aqueous dispersion of PTFE (aqueous dispersion of PTFE particles having an average particle size of 0.28 µm (solid content: 60 % by weight), 6 % by weight of nonionic polyether surfactant based on PTFE is contained as a dispersion stabilizer), 98.84 parts of aqueous dispersion of polyamideimide (an aqueous dispersion (solid content: 20 % by weight) of polyamideimide prepared by mixing and stirring 20 parts of polyamideimide varnish (containing 71 % by weight of N-methyl-2-pyrrolidone) having a solid content of 29 % by weight with 9 parts of deionized water), 6.59 parts of mill base 1 (pigment, a mixture prepared by mixing 90.2 parts of deionized water, 6.24 parts of nonionic polyether surfactant and 31.1 parts of carbon with a ball mill), 1.39 parts of ammonium salt of fluorocarboxylate (dispersion stabilizer), 30.98 parts of deionized water (liquid carrier), 1.39 parts of high molecular polyether surfactant 1 (dispersion stabilizer, polyoxyethylene nonyl phenyl ether), 0.4 part of methyl cellulose (thickener) and 0.63 part of acetylene defoaming agent 1 (a mixture of 2,4,7,9-tetramethyl-5-decyne-4,7-diol and nonionic surfactant).

The obtained coating composition for primer was coated at 18° to 22°C on an aluminum plate previously degreased and sand-blasted by using the curtain flow coater (I) shown in Fig. 1 (peripheral velocity of a rotation part (impeller) of a centrifugal pump: 5 m/sec, clearance of slit: 0.5 mm, effective width of conveyor: 300 mm, conveyor length: 1,010 mm (two conveyors were provided), conveyor speed: adjusted to 80 to 100 m/min) so that a coating thickness after drying would become 12 to 15 µm. The drying was carried out at 80° to 100°C for 15 minutes to give a dried coating film. A viscosity (20°C) of the coating composition when used (coated) was 116 mPa·s. The coating was started 30 minutes after starting operation of the curtain flow coater. Baking was not carried out since the coating film was a primer layer.

The viscosity was measured by rotating No. 2 rotor of Brookfield viscometer (model BM) available from KABUSHIKI KAISHA TOKYO KEIKI at 60 rpm at 20°C for two minutes.

An appearance of the coating film obtained 30 minutes after starting of the drying was observed by the following method. The appearance was "good" in observation with naked eyes, and was evaluated as Point 5 in observation through a microscope.

(Appearance of coating film)

Observation with naked eyes: Existence of marks of foams and hollow on the coating film is observed and if there is no abnormality, it is evaluated as "good".
Observation through microscope: Existence of marks of foams is observed with a metallurgical microscope (×30) available from NIKON CORPORATION, and the number of marks is evaluated by five points.
Point 1: More than 20 marks of foams per 1 $mm^2$.
Point 2: More than 10 and not more than 20 marks of foams per 1 $mm^2$.
Point 3: More than 3 and not more than 10 marks of foams per 1 $mm^2$.
Point 4: 1 to 3 marks of foams per 1 $mm^2$.
Point 5: No marks of foams.

EXAMPLES 2 to 7

Liquid coating compositions were prepared by mixing the following components in amounts shown in Table 1 (part by weight) and coated on the primer layer formed in Example 1 with the curtain flow coater (I).

(Resin component)

Aqueous dispersion of PTFE:

Aqueous dispersion of PTFE particles having an average particle size of 0.28 μm (solid content: 60 % by weight) and containing 6 % by weight of nonionic polyether surfactant as a dispersion stabilizer based on PTFE.

Polyether resin emulsion:

Aqueous dispersion (solid content: 30 % by weight) of polyether type urethane resin having a molecular weight of about 2,000.

(Dispersion stabilizer)

Ammonium perfluorooctanoate
Sodium lauryl sulfate

(Defoaming agent)

High molecular polyether surfactant 2:

Oxyethylene/oxypropylene random copolymer (high molecular polyether surfactant as a defoaming agent) having an average molecular weight of 25,000.

Toluene (defoaming agent as an organic liquid)

Mineral spirit (defoaming agent as an organic liquid):

Industrial gasoline No. 4 of Japanese Industrial Standard which is a mixture of saturated hydrocarbon and aromatic hydrocarbon (boiling point: 160° to 200°C).

Acetylene defoaming agent 2:

A mixture of 2,4,7,9-tetramethyl-5-decyne-4,7-diol and ethylene glycol (75/25 weight ratio).

Silicone defoaming agent:

Emulsion prepared by emulsifying alkyl-modified silicone oil with a nonionic surfactant as a dispersion stabilizer in water (solid content: 30 % by weight).

(pH controller)

Succinic acid

(Coloring agent)

Mill base 2:

A mixture prepared by mixing 6.75 parts of deionized water, 0.72 part of nonionic polyether surfactant as a dispersion stabilizer, 0.18 part of ammonium perfluorooctanoate, 0.90 part of carbon and 0.45 part of iron oxide red ($\alpha$-iron trioxide) with a ball mill.

(Filler)

Mica coated with titanium dioxide:

Mica coated with titanium dioxide and having a specific weight of about 3 and an average particle size of 30 μm.

(Liquid carrier)

Deionized water

The curtain flow coater (I) having the same specifications as in Example 1 was used, and a conveyor speed was adjusted in a range of 45 to 90 m/min to a desired coating thickness.

(Coating method)

The coating compositions of Examples 2 to 7 were coated on the primer layer formed in Example 1 on the respective coating conditions (peripheral velocity of impeller of pump) shown in Table 1 so that a coating thickness would be from 17 to 22 μm (Table 1) after drying. The coating was carried out about 30 minutes after starting operation of the curtain flow coater.

The coated article obtained 30 minutes after starting of the coating was dried at 80° to 100°C for 10 minutes, and then baked at 380°C for 20 minutes, followed by cooling to room temperature. Then with respect to the coating film, appearance thereof was evaluated and the following tests were carried out. The results are shown in Table 1.

(Surface roughness)

An average value (Ra) of surface roughness of a coating film is obtained by using a surface roughness meter (trade name: SURFCOM) available from TOKYO SEIMITSU KABUSHIKI KAISHA.

(Gloss)

A glossiness of a coating film is measured under the conditions of incidence angle of 60° and light receiving angle of 60° by using SM COLOR COMPUTER (Model SM-7) available from SUGA SHIKENKI KABUSHIKI KAISHA.

EXAMPLE 8

A liquid coating composition was prepared by using components shown in Table 1 and coated at 20°C on the primer layer formed in Example 1 by using the curtain flow coater (II) having the following specifications. The coating was carried out about 30 minutes after starting of the curtain flow coater.

The coated article obtained 30 minutes after starting of the coating was dried at 80° to 100°C for 10 minutes, and then baked at 380°C for 20 minutes, followed by cooling to room temperature. Then with respect to the coating film, appearance thereof was evaluated and the following tests were carried out in the same manner as in Example 2. The results are shown in Table 1.

Curtain flow coater (II)

The curtain flow coater was an equipment shown in Fig. 2. Clearance of slit: 0.5 mm. Effective width of conveyor: 300 mm. Conveyor length: 1,010 mm (two conveyors were provided). A conveyor speed was adjusted to 45 to 90 m/min. A maximum air pressure in the chamber 10 was adjusted to 0.1 MPa.

COMPARATIVE EXAMPLE 1

A liquid coating composition was prepared by using components shown in Table 1. The coating composition was spray-coated at a spraying pressure of 0.2 MPa by using a gravity-type spray gun having a nozzle diameter of 1.0 mm (Model RG-2 available from ANESTO IWATA KABUSHIKI KAISHA) so that a coating thickness after drying would be 20 μm.

After the coating, drying was carried out at 80° to 100°C for 10 minutes, and then baking was carried out at 380°C for 20 minutes, followed by cooling to room temperature. Then with respect to the coating film, appearance thereof was evaluated and the following tests were carried out in the same manner as in Example 2. The results are shown in Table 1.

TABLE 1

| | Ex. 2 | Ex. 3 | Ex. 4 |
|---|---|---|---|
| Resin component | | | |
| Aqueous dispersion of PTFE | 100 | 100 | 100 |
| Polyether resin emulsion | 6 | 6 | 6 |
| Dispersion stabilizer | | | |
| Ammonium perfluorooctanoate | 1.09 | 1.09 | 0.12 |
| Sodium lauryl sulfate | 0.07 | 0.07 | 0.07 |
| Defoaming agent | | | |
| High molecular polyether surfactant 2 | 4.13 | 4.13 | 4.13 |
| Toluene | 0.91 | 0.91 | 0.91 |
| Mineral spirit | 2.63 | 2.63 | 2.63 |
| Acetylene defoaming agent 2 | | | 0.3 |
| Silicone defoaming agent | | | |
| pH controller | | | |
| Succinic acid | 0.02 | 0.02 | 0.02 |
| Pigment | | | |
| Mill base 2 | 0.056 | 0.056 | 0.056 |
| Filler | | | |
| Mica coated with titanium dioxide | 0.76 | 0.76 | 0.76 |
| Liquid carrier | | | |
| Deionized water | 25.36 | 35.96 | 24.20 |

- continued -

- continued -

| | Ex. 5 | Ex. 6 | Ex. 7 | Ex. 8 | Com. Ex. 1 |
|---|---|---|---|---|---|
| Resin component | | | | | |
| Aqueous dispersion of PTFE | 100 | 100 | 100 | 100 | 100 |
| Polyether resin emulsion | 6 | 6 | 6 | 6 | 6 |
| Dispersion stabilizer | | | | | |
| Ammonium perfluorooctanoate | 0.12 | 1.09 | 1.09 | 1.09 | 1.09 |
| Sodium lauryl sulfate | 0.07 | 0.07 | 0.07 | 0.07 | 0.07 |
| Defoaming agent | | | | | |
| High molecular polyether surfactant 2 | 4.13 | 4.13 | 4.13 | 4.13 | 4.13 |
| Toluene | 0.91 | 0.91 | 0.91 | 0.91 | 0.91 |
| Mineral spirit | 2.63 | 2.63 | 2.63 | 2.63 | 2.63 |
| Acetylene defoaming agent 2 | | | | | |
| Silicone defoaming agent | 0.3 | | | | |
| pH controller | | | | | |
| Succinic acid | 0.02 | 0.02 | 0.02 | 0.02 | 0.02 |
| Pigment | | | | | |
| Mill base 2 | 0.056 | 0.056 | 0.056 | 0.056 | 0.056 |
| Filler | | | | | |
| Mica coated with titanium dioxide | 0.76 | 0.76 | 0.76 | 0.76 | 0.76 |
| Liquid carrier | | | | | |
| Deionized water | 24.20 | 25.36 | 19.07 | 35.96 | 19.07 |

- continued -

- continued -

| | Ex. 2 | Ex. 3 | Ex. 4 |
|---|---|---|---|
| Physical properties of coating composition | | | |
| Viscosity (mPa·s, 20°C) | 106 | 53 | 90 |
| Coating conditions | | | |
| Curtain flow coater | (I) | (I) | (I) |
| Peripheral velocity of rotation part (m/sec) | 4.7 | 4.7 | 4.7 |
| Air pressure (MPa) | - | - | - |
| Physical properties of coating film | | | |
| Surface roughness (μm) | 0.94 | 0.94 | 0.94 |
| Gloss | 22.1 | 22.1 | 22.1 |
| Appearance of coating film | | | |
| Observation with naked eyes | Good | Good | Good |
| Microscopic observation | Point 5 | Point 5 | Point 5 |

- continued -

- continued -

| | Ex. 5 | Ex. 6 | Ex. 7 | Ex. 8 | Com. Ex. 1 |
|---|---|---|---|---|---|
| Physical properties of coating composition | | | | | |
| Viscosity (mPa·s, 20°C) | 90 | 106 | 180 | 53 | 180 |
| Coating conditions | | | | | |
| Curtain flow coater | (I) | (I) | (I) | (II) | Spray coat |
| Peripheral velocity of rotation part (m/sec) | 4.7 | 11 | 11 | - | - |
| Air pressure (MPa) | - | - | - | 0.1 | - |
| Physical properties of coating film | | | | | |
| Surface roughness (μm) | 0.94 | 0.94 | 1.16 | 0.94 | 1.34 |
| Gloss | 22.1 | 22.1 | 15.9 | 22.1 | 16.2 |
| Appearance of coating film | | | | | |
| Observation with naked eyes | Good | Good | Good | Good | Good |
| Microscopic observation | Point 5 | Point 3 | Point 3 | Point 5 | Point 3 |

EXAMPLE 9

After operating the curtain flow coater (I) continuously for seven hours under the completely same conditions as in Example 2, coating was carried out, followed by drying and baking. With respect to the coating film of the obtained coated article, appearance and physical properties thereof was evaluated in the same manner as in Example 2. Good results were obtained similarly to Example 2.

As it is clear from the results of Examples 1 to 9 and Comparative Example, when the liquid coating composition which contains the fluorine-containing polymer particles having an average particle size of from 0.01 to 100 μm and has a viscosity adjusted to 0.1 to 500 mPa·s at coating (0°C to 25°C), a curtain flow coater which has been difficult to be used for the coating composition comprising fluorine-containing polymer particles can be used and a coating film which is low in surface roughness, is excellent in gloss and is free from marks of foams or small in the number of marks even if observation is made through a microscope can be obtained.

Also in case where the curtain flow coater (I) having a coating composition supply pump equipped with a rotation part is used, when the coating composition is supplied to the head part under the condition that a peripheral velocity of the rotation part of the supply pump is from 0.1 to 12.0 m/sec, a coating film found free from marks of foams even by means of a microscope can be obtained. On the other hand, also in case of the curtain flow coater (II) employing the air pump, a coating film which is low in surface roughness, is excellent in gloss and is free from marks of foams even if observation is made through a microscope can be obtained.

EXAMPLE 10

A curtain flow coater (I) shown in Fig. 1 was used. The feeding pipe 20 was branched into two pipes 23a and 23b above the filter chamber 17 and the pipes 23a and 23b were connected to the inlet port 22a and 22b, respectively which were provided on the head part 3 as shown in Fig. 3.

Thirty minutes after starting of the curtain flow coater, coating was carried out by using the coating composition used in Example 2 on an aluminum plate (200 mm × 200 mm × 1.5 mm) previously degreased and sand-blasted under the coating conditions that a peripheral velocity of the rotation part (impeller) of the centrifugal pump was 4.7 m/sec, a clearance of the slit 4 was 0.5 mm, an effective width of the conveyor was 300 mm, a conveyor length was 1,010 mm (two conveyors were provided) and a conveyor speed was adjusted to 85 m/min so that a coating thickness after drying would be 20μm.

The coated article obtained 30 minutes after starting of the coating was dried at 80° to 100°C for 10 minutes, and then baked at 380°C for 20 minutes, followed by cooling to room temperature. Then appearance and physical properties of the coating film were evaluated in the same manner as above and a thickness of the coating film on each part of the coated article was measured in the manner mentioned below. The results are shown in Table 2.

A coating thickness of the coated article obtained in Example 2 (in case of one inlet port) was also measured for reference purpose.

(Measurement of coating thickness)

With respect to the baked coated article 25 shown in plan view of Fig. 4, a coating thickness at four points A to D shown in Fig. 4 was measured with an eddy-current instrument Model EL-10D for measuring coating thickness which was available from KABUSHIKI KAISHA SANKO DENSHI KENKYUSHO.

EXAMPLE 11

Coating was carried out in the same manner as in Example 10 except that a peripheral velocity of a rotation part (impeller) of the centrifugal pump was reduced to 4.0 m/sec. Physical properties, appearance and coating thickness of a coating film of the coated article were evaluated. The results are shown in Table 2.

TABLE 2

| | Ex. 10 | Ex. 11 | Ex. 2 (Reference) |
|---|---|---|---|
| Components of coating composition | | | |
| Resin component | | | |
| Aqueous dispersion of PTFE | 100 | 100 | 100 |
| Polyether resin emulsion | 6 | 6 | 6 |
| Dispersion stabilizer | | | |
| Ammonium perfluorooctanoate | 1.09 | 1.09 | 1.09 |
| Sodium lauryl sulfate | 0.07 | 0.07 | 0.07 |
| Defoaming agent | | | |
| High molecular polyether surfactant 2 | 4.13 | 4.13 | 4.13 |
| Toluene | 0.91 | 0.91 | 0.91 |
| Mineral spirit | 2.63 | 2.63 | 2.63 |
| Acetylene defoaming agent 2 | | | |
| Silicone defoaming agent | | | |
| pH controller | | | |
| Succinic acid | 0.02 | 0.02 | 0.02 |
| Pigment | | | |
| Mill base 2 | 0.056 | 0.056 | 0.056 |
| Filler | | | |
| Mica coated with titanium dioxide | 0.76 | 0.76 | 0.76 |
| Liquid carrier | | | |
| Deionized water | 25.36 | 25.36 | 25.36 |

- continued -

- continued -

| | Ex. 10 | Ex. 11 | Ex. 2 (Reference) |
|---|---|---|---|
| Physical properties of coating composition | | | |
| Viscosity (mPa·s, 20°C) | 106 | 106 | 106 |
| Coating conditions | | | |
| Curtain flow coater | (I) | (I) | (I) |
| Method of supply | Fig. 3 | Fig. 3 | Fig. 5 |
| Peripheral velocity of rotation part (m/sec) | 4.7 | 4.0 | 4.7 |
| Physical properties of coating film | | | |
| Surface roughness (μm) | 0.94 | 0.94 | 0.94 |
| Coating thickness (μm) | | | |
| Measuring point A | 20 | 19 | 20 |
| Measuring point B | 20 | 19 | 15 |
| Measuring point C | 20 | 19 | 20 |
| Measuring point D | 20 | 19 | 15 |
| Gloss | 22.1 | 22.1 | 22.1 |
| Appearance of coating film | | | |
| Observation with naked eyes | Good | Good | Good |
| Observation with microscope | Point 5 | Point 5 | Point 5 |

It can be seen from Table 2 that a thickness of coating film of the coated article is more uniform by providing

two inlet ports positioned opposite to each other for supplying a coating composition into the head part than providing one inlet port. The coated article obtained in Example 2 which is put in Table 2 for reference purpose is somewhat inferior in uniformity of the coating thickness, but it is clear from Table 1 that the physical properties and appearance thereof are more excellent than those produced by conventional method. Therefore the coated article obtained in Example 2 can be used without any problem for applications where no uniformity of a coating thickness is required (for example, cooking apparatuses such as frying pan).

EXAMPLES 12 to 18 and COMPARATIVE EXAMPLES 2 to 4

Coating compositions were prepared by mixing the following components in a mixing ratio shown in Table 3 (part by weight).

(Polymer particle component)

PTFE: PTFE particles having an average article size of 0.28 μm
Polyether resin emulsion: Emulsion of polyether type urethane resin particles having a molecular weight of about 2,000 and a solid content of 30 % by weight.

(Dispersion stabilizer)

Nonionic surfactant: Polyoxyethylene alkyl phenyl ether (molecular weight: 640)
Fluorine-containing anionic surfactant: Ammonium perfluorooctanoate Anionic surfactant: Sodium lauryl sulfate

(Film forming agent)

Polyether film forming agent: Oxyethylene/oxypropylene block copolymer having an average molecular weight of 25,000

(pH controller)

Succinic acid

(Pigment)

Mill base: A mixture prepared by mixing 6.75 parts by weight of deionized water, 0.72 part by weight of nonionic polyether surfactant, 0.18 part by weight of ammonium perfluorooctanoate, 0.90 part by weight of carbon and 0.45 part by weight of iron oxide red (α-iron trioxide) in a ball mill

(Filler)

Titanium dioxide-coated mica: Mica coated with titanium dioxide which has a specific weight of about 3 and an average particle size of 30 μm

(Aqueous liquid carrier)

Deionized water

(Defoaming agent)

n-Octane (number of carbon atoms: 7)
n-Decane (number of carbon atoms: 10)
n-Dodecane (number of carbon atoms: 12)

Trimethylbenzene (number of carbon atoms: 9)
Xylene (number of carbon atoms: 8)
Mineral spirit: Industrial gasoline No. 4 of Japanese Industrial Standard which is a mixture of saturated hydrocarbon and aromatic hydrocarbon and has a boiling point of from 160° to 200°C
n-Pentane (number of carbon atoms: 5)

Polyether-modified silicone oil
With respect to each of the obtained aqueous dispersion compositions, defoaming effect was evaluated by the following method. The results are shown in Table 3.

(Defoaming effect of defoaming agent)

A defoaming effect was evaluated by measuring an amount of foaming. The amount of foaming was measured in the manner mentioned below.
In a 100 ml measuring cylinder is put 20 ml of coating composition, and the measuring cylinder is shaken vigorously up and down. Then an amount of foaming was read by a scale marked on the cylinder. When the amount of foaming is not more than 10 ml, a defoaming effect of the defoaming agent is evaluated as good.

EXAMPLE 19

About 30 minutes after starting of the curtain flow coater of Fig. 1, the coating composition (aqueous dispersion) shown in Example 18 of Table 3 was coated on an aluminum plate previously subjected to degreasing treatment by using the above-mentioned coater under the conditions that a peripheral velocity of rotation part (impeller) of a centrifugal pump was 4.7 m/sec and a conveyor speed was 85 m/min. After the coating, drying was carried out at 80° to 100°C for 10 minutes, and then baking was carried out at 380°C for 20 minutes (coating thickness after the baking: 22 μm), followed by cooling to room temperature. The characteristics of the coating film were observed in the manner mentioned below.

(Characteristics of coating film)

Coating was carried out in the manner mentioned below by using a known curtain flow coater diagrammatically shown in Fig. 1 and an appearance of the obtained coating film was observed.
The aqueous dispersion composition was coated at 18° to 22°C on an aluminum plate previously subjected to degreasing treatment by using the curtain flow coater shown in Fig. 1 (peripheral velocity of rotation part (impeller) of centrifugal pump: 4.7 m/sec, clearance of slit 4: 0.5 mm, effective width of conveyor: 300 mm, conveyor length: 1,010 mm (two conveyors were provided), a conveyor speed was adjusted to 80 to 100 m/min). After the coating, drying was carried out at 80° to 100°C for 10 minutes, and then baking was carried out at 380°C for 20 minutes, followed by cooling to room temperature. Then appearance of the coating film were observed. A coating thickness after the baking was 22 μm. A viscosity (20°C) of the coating composition when used (coated) was 106 mPa·s. The coating was started 30 minutes after initiating the operation of the curtain flow coater.
The viscosity was measured at 20°C by rotating No. 2 rotor of B type viscometer (model BM) available from KABUSHIKI KAISHA TOKYO KEIKI at 60 rpm for two minutes.
An appearance of the obtained coating film was evaluated 30 minutes after starting of the coating in the same manner as in Example 7. The appearance was evaluated as "Good" in the observation with naked eyes and evaluation with a microscope was Point 5.

COMPARATIVE EXAMPLE 5

Coating was carried out by using a curtain flow coater under the same conditions as in Example 18 except that a composition shown in Comparative Example 4 of Table 3 was used as an aqueous dispersion composition. Marks of foaming were found when the coating film after the baking was observed with naked eyes, and smooth coating film could not be formed.

TABLE 3

| | Ex. 12 | Ex. 13 | Ex. 14 | Ex. 15 | Ex. 16 | Ex. 17 |
|---|---|---|---|---|---|---|
| (Components of polymer particles) | | | | | | |
| PTFE | 60 | 60 | 60 | 60 | 60 | 60 |
| Polyether resin emulsion | - | - | - | - | - | - |
| (Dispersion stabilizer) | | | | | | |
| Fluorine-containing anionic surfactant | 0.06 | 0.06 | 0.06 | 0.06 | 0.06 | 0.06 |
| Nonionic surfactant | 3.6 | 3.6 | 3.6 | 3.6 | 3.6 | 3.6 |
| Anionic surfactant | - | - | - | - | - | - |
| (Film forming agent) | | | | | | |
| Polyether type film forming agent | - | - | - | - | - | - |
| (pH controller) | | | | | | |
| Succinic acid | - | - | - | - | - | - |
| (Pigment) | | | | | | |
| Mill base | - | - | - | - | - | - |

- continued -

- continued -

| | Ex. 12 | Ex. 13 | Ex. 14 | Ex. 15 | Ex. 16 | Ex. 17 |
|---|---|---|---|---|---|---|
| (Filler) | | | | | | |
| Mica coated with titanium dioxide | – | – | – | – | – | – |
| (Liquid carrier) | | | | | | |
| Deionized water | 40 | 40 | 40 | 40 | 40 | 40 |
| (Defoaming agent) | | | | | | |
| n-Octane (7 carbon atoms) | 3 | – | – | – | – | – |
| n-Decane (10 carbon atoms) | – | 3 | – | – | – | – |
| n-Dodecane (12 carbon atoms) | – | – | 3 | – | – | – |
| Trimethylbenzene (9 carbon atoms) | – | – | – | 3 | – | – |
| Xylene (8 carbon atoms) | – | – | – | – | 3 | – |
| Mineral spirit | – | – | – | – | – | 3 |
| n-Pentane (5 carbon atoms) | – | – | – | – | – | – |
| Polyether-modified silicone oil | – | – | – | – | – | – |
| Amount of foaming (ml) | 4 | 1 | 2 | 7 | 9 | 3 |
| Appearance of coating film | | | | | | |
| Observation with naked eyes | – | – | – | – | – | – |
| Observation with microscope | – | – | – | – | – | – |

- continued -

- continued -

| | Ex. 18 | Com. Ex. 2 | Com. Ex. 3 | Com. Ex. 4 | Com. Ex. 5 |
|---|---|---|---|---|---|
| (Components of polymer particles) | | | | | |
| PTFE | 60 | 60 | 60 | 60 | 60 |
| Polyether resin emulsion | 6 | - | - | - | 6 |
| (Dispersion stabilizer) | | | | | |
| Fluorine-containing anionic surfactant | 1.09 | 0.06 | 0.06 | 0.06 | 1.09 |
| Nonionic surfactant | 3.6 | 3.6 | 3.6 | 3.6 | 3.6 |
| Anionic surfactant | 0.07 | - | - | - | 0.07 |
| (Film forming agent) | | | | | |
| Polyether type film forming agent | 4.13 | - | - | - | 4.13 |
| (pH controller) | | | | | |
| Succinic acid | 0.02 | - | - | - | 0.02 |
| (Pigment) | | | | | |
| Mill base | 0.056 | - | - | - | 0.056 |

- continued -

- continued -

| | Ex. 18 | Com. Ex. 2 | Com. Ex. 3 | Com. Ex. 4 | Com. Ex. 5 |
|---|---|---|---|---|---|
| (Filler) | | | | | |
| Mica coated with titanium dioxide | 0.76 | - | - | - | 0.76 |
| (Liquid carrier) | | | | | |
| Deionized water | 65.36 | 40 | 40 | 40 | 65.36 |
| (Defoaming agent) | | | | | |
| n-Octane (7 carbon atoms) | - | - | - | - | - |
| n-Decane (10 carbon atoms) | - | - | - | - | - |
| n-Dodecane (12 carbon atoms) | - | - | - | - | - |
| Trimethylbenzene (9 carbon atoms) | - | - | - | - | - |
| Xylene (8 carbon atoms) | - | - | - | - | - |
| Mineral spirit | 2.63 | - | - | - | - |
| n-Pentane (5 carbon atoms) | - | - | 3 | - | - |
| Polyether-modified silicone oil | - | - | - | 3 | - |
| Amount of foaming (ml) | 5 | 30 | 30 | 18 | 41 |
| Appearance of coating film | | | | | |
| Observation with naked eyes | Good | - | - | - | Not good |
| Observation with microscope | Point 5 | - | - | - | Point 1 |

INDUSTRIAL APPLICABILITY

According to the present invention, a curtain flow coater can be used for coating of a coating composition containing fluorine-containing polymer, though the use for that purpose has been difficult. A lot of coated articles can be obtained continuously, and a coating composition can be re-used, which is economical and can provide a coating

method being advantageous from environmental point of view.

A coating film of the obtained coated article is low in surface roughness, is excellent in gloss and is free from marks of foams or small in the number of marks even if observation is made through a microscope.

Also the aqueous dispersion composition of fluorine-containing polymer of the present invention to which a specific hydrocarbon compound is added as a defoaming agent is less foamed and is suitable for coating by using a curtain flow coater. The coating film obtained by coating the aqueous dispersion composition of the present invention with a curtain flow coater is free from marks of foams even by observing through a microscope and is smooth.

## Claims

1. A method of coating a substrate, which is **characterized in that** a liquid coating composition which contains fluorine-containing polymer particles having an average particle size of from 0.01 to 100 μm and has a viscosity of from 0.1 to 500 mPa·s at coating is coated on a substrate with a curtain flow coater.

2. A method of coating a substrate, **characterized by** using a curtain flow coater which comprises a head part having a slit, a reservoir tank of a liquid coating composition, a coating composition supply pump being arranged in the reservoir tank and having a rotation part and a conveyor for transferring the substrate and is used to coat a surface of the substrate by feeding the coating composition from the reservoir tank to the head part with the composition supply pump by adjusting a peripheral velocity of the rotation part of the supply pump and flowing down the liquid coating composition onto the substrate being transferred by the conveyor; said liquid coating composition comprises fluorine-containing polymer particles having an average particle size of from 0.01 to 100 μm, has a viscosity of from 0.1 to 500 mPa·s at coating, and is supplied to the head part under condition that a peripheral velocity of the rotation part of the pump is from 0.1 to 12.0 m/sec.

3. A method of coating a substrate **characterized by** using a curtain flow coater which comprises a head part having a slit, a lower reservoir tank of a liquid coating composition, an upper reservoir tank of the liquid coating composition, an air pump and a substrate feeding conveyor and is used to coat a surface of the substrate by feeding the liquid coating composition from the lower reservoir tank to the upper reservoir tank with the air pump, feeding the composition spontaneously from the upper reservoir tank into the head part and flowing down the liquid coating composition onto the substrate being transferred by the conveyor; said liquid coating composition comprises fluorine-containing polymer particles having an average particle size of from 0.01 to 100 μm and has a viscosity of from 0.1 to 500 mPa·s at coating.

4. The coating method of Claim 2 or 3, wherein said liquid coating composition is prepared by adding 0.01 to 15.0 parts by weight of at least one selected from the group consisting of an organic liquid, high molecular polyether surfactant, fatty acid ester, metal soap and silicone compound which have a defoaming ability on the basis of 100 parts by weight of the coating composition.

5. The coating method of any of Claims 1 to 4, wherein a temperature of the coating composition at coating is within a range of from 0° to 25°C.

6. A coated article obtained by coating according to the method of any of Claims 1 to 5.

7. A curtain flow coater, which is **characterized by** comprising a head part having a slit, a reservoir tank of a liquid coating composition, a coating composition supply pump being arranged in the reservoir tank and having a rotation part and a conveyor for transferring the substrate and is used to coat a surface of the substrate by feeding the coating composition from the reservoir tank to the head part with the composition supply pump by adjusting a peripheral velocity of the rotation part of the supply pump and flowing down the coating composition onto the substrate being transferred by the conveyor, said curtain flow coater having a mechanism for supplying the coating composition into the head part through inlet ports arranged in the same number on both two side walls being faced opposite to each other in a direction crossing the slit.

8. An aqueous dispersion composition, which comprises an aqueous dispersion comprising fluorine-containing polymer particles having an average particle size of from 0.01 to 100 μm and a surfactant and as a defoaming agent, 0.01 to 20 parts by weight of a saturated aliphatic hydrocarbon having 6 to 12 carbon atoms and/or an aromatic hydrocarbon having 7 to 11 carbon atoms on the basis of 100 parts by weight of a solid content of the aqueous dispersion.

**9.** A coating composition comprising the aqueous dispersion composition of Claim 8.

**10.** The coating composition of Claim 9, which is used for coating with a curtain flow coater and has a viscosity of from 0.1 to 500 mPa·s at coating.

FIG. 1

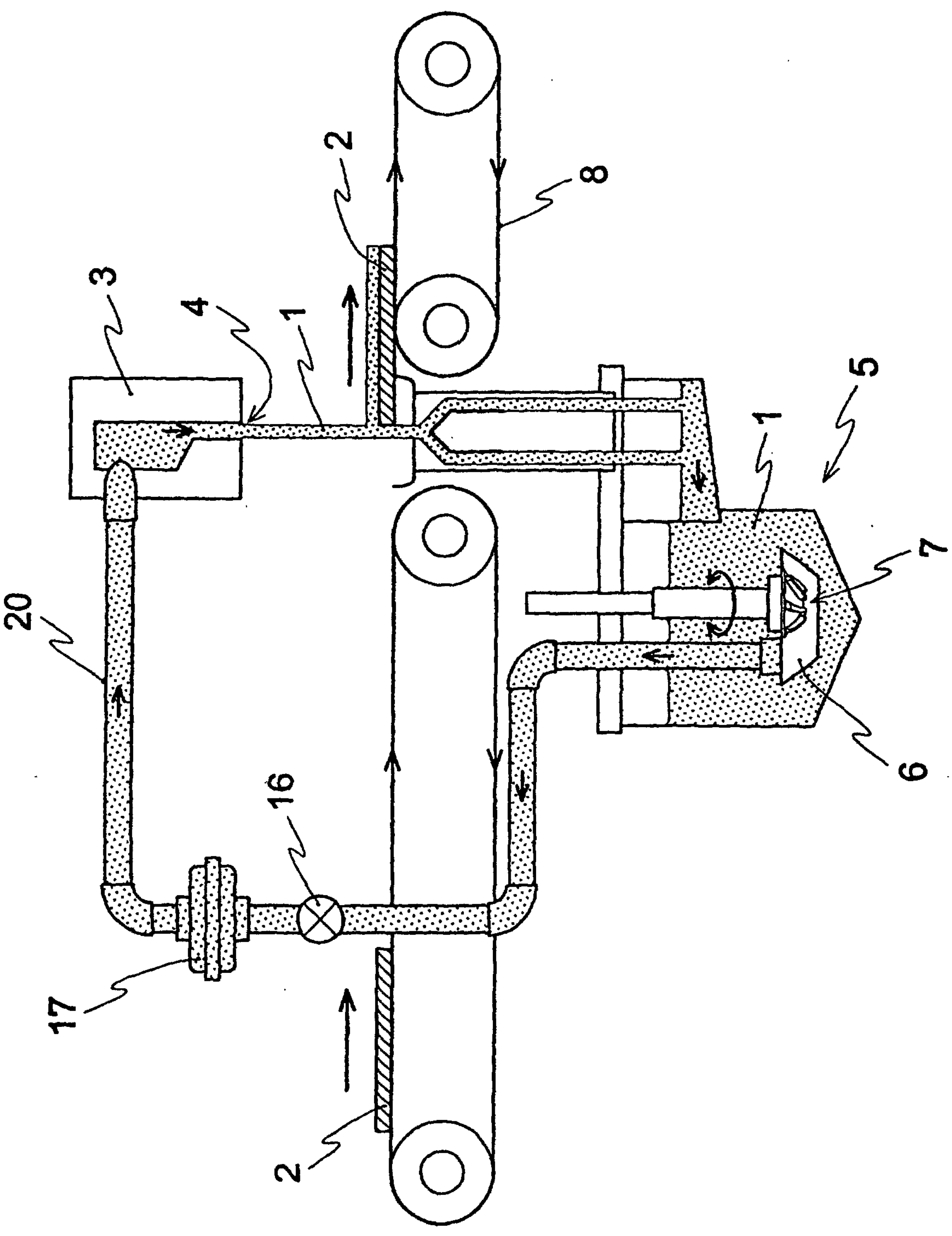

FIG. 2

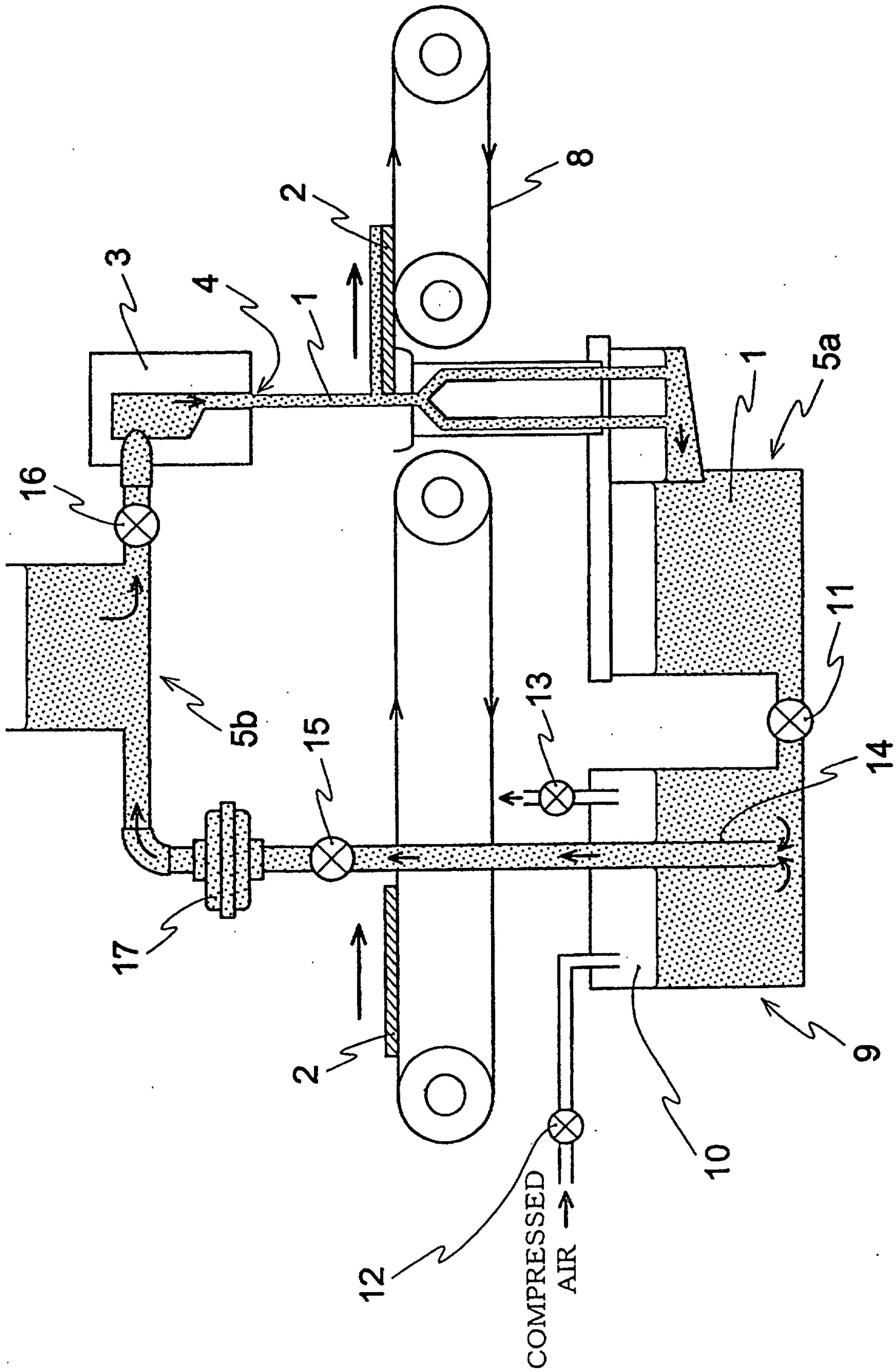

FIG. 3

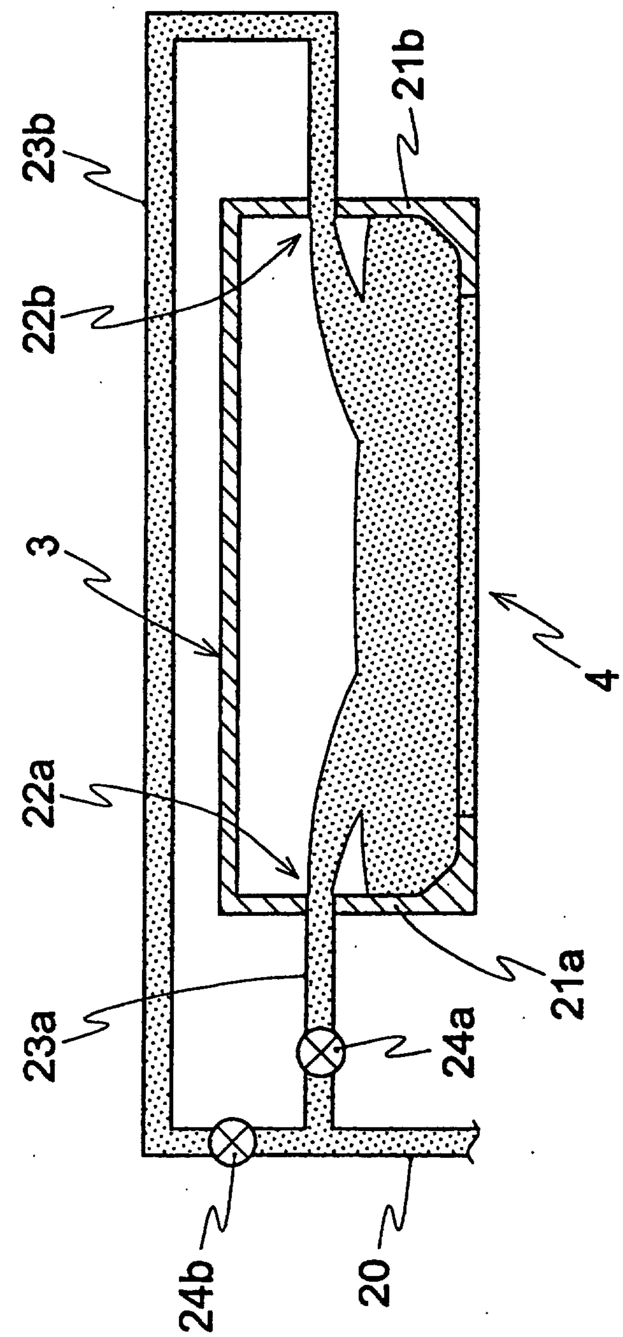

FIG. 4

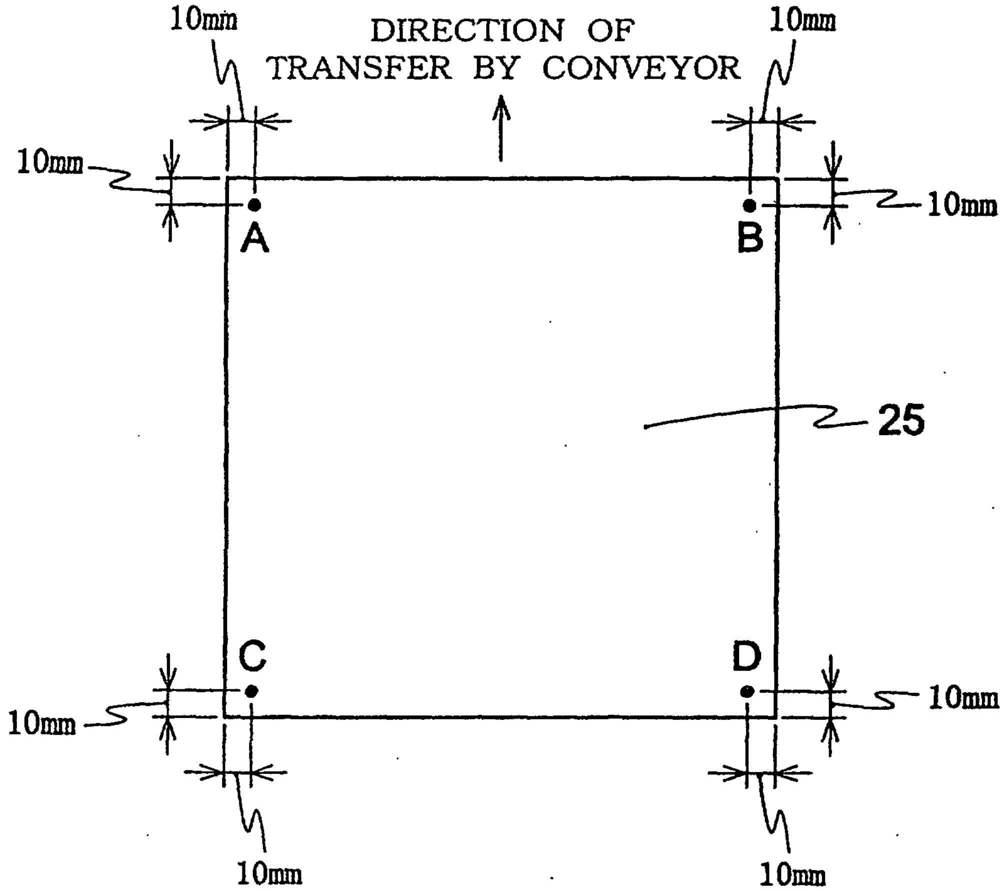
10mm
DIRECTION OF TRANSFER BY CONVEYOR
10mm
10mm
A
B
10mm
25
C
D
10mm
10mm
10mm
10mm

FIG. 5

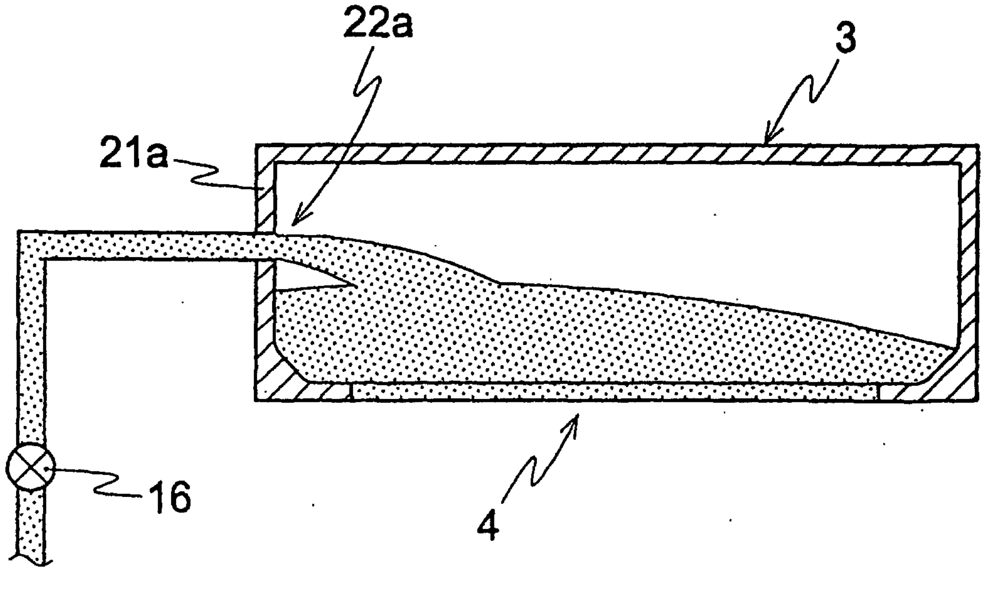
22a
3
21a
16
4

# INTERNATIONAL SEARCH REPORT

International application No.
PCT/JP01/00226

A. CLASSIFICATION OF SUBJECT MATTER
Int.Cl[7] B05D 1/30, B05D 7/24 303

According to International Patent Classification (IPC) or to both national classification and IPC

B. FIELDS SEARCHED

Minimum documentation searched (classification system followed by classification symbols)
Int.Cl[7] B05D 1/30, B05D 7/24 303

Documentation searched other than minimum documentation to the extent that such documents are included in the fields searched
Jitsuyo Shinan Koho 1926-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 01-289896, A (Central Glass Co., Ltd.), 21 November, 1989 (21.11.89) (Family: none) | 1-10 |
| Y | JP, 57-147473, A (Shigeharu NAGANE), 11 September, 1982 (11.09.82) (Family: none) | 1,2 |
| Y | JP, 62-038272, A (Kawakami Toryo K.K.), 19 February, 1987 (19.02.87) (Family: none) | 1,2 |
| Y | JP, 11-197572, A (Sony Corporation), 27 July, 1999 (27.07.99) (Family: none) | 3 |
| Y | JP, 11-128803, A (Nichiha Corp.), 18 May, 1999 (18.05.99) (Family: none) | 7 |
| Y | JP, 06-057893, A (Nisshin Kogyo K.K.), 01 March, 1994 (01.03.94) (Family: none) | 4-6, 8-10 |
| Y | JP, 07-207191, A (Daicel Chemical Industries, Ltd.), 08 August, 1995 (08.08.95) (Family: none) | 4-6, 8-10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>10 April, 2001 (10.04.01) | Date of mailing of the international search report<br>17 April, 2001 (17.04.01) |
| Name and mailing address of the ISA/<br>Japanese Patent Office | Authorized officer |
| Facsimile No. | Telephone No. |

Form PCT/ISA/210 (second sheet) (July 1992)